# EUROPEAN PATENT APPLICATION

(11) **EP 2 960 101 A1**
(43) Date of publication of application: **30.12.2015**
(21) Application number: 13875389.2
(22) Date of filing: 22.02.2013
(51) Int. Cl.: B60L 15/20, B60K 6/442, B60K 6/445, B60L 11/14, B60W 10/08, B60W 20/00

(54) **VEHICLE DRIVE DEVICE**

(71) Applicant: TOYOTA JIDOSHA KABUSHIKI KAISHA, Toyota-shi, Aichi-ken, 471-8571 (JP)
(72) Inventor: IWASE, Yuji, Toyota-shi Aichi 471-8571 (JP); SUZUKI, Yosuke, Toyota-shi Aichi 471-8571 (JP); KITABATAKE, Hirotatsu, Toyota-shi Aichi 471-8571 (JP); OSHIUMI, Yasuhiro, Toyota-shi Aichi 471-8571 (JP); KAWAI, Takashi, Toyota-shi Aichi 471-8571 (JP)
(74) Representative: Intès, Didier Gérard André
(86) International application number: PCT/JP2013/054552
(87) International publication number: WO 2014/128925

(57) **Abstract**

A first rotating machine and a second rotating machine are provided. Total torque of a torque command value Tt1 of the first rotating machine and a torque command value Tt2 of the second rotating machine is set higher than requested torque Tr for a vehicle when transition from a first travel mode, in which one of the first rotating machine and the second rotating machine is used as a power source, to a second travel mode, in which the first rotating machine and the second rotating machine are used as the power sources, is made. The torque command value of the rotating machine, which is used as the power source in the first travel mode, during the transition from the first travel mode to the second travel mode may be set higher than the torque command value before beginning of the transition.

## Description

### TECHNICAL FIELD

The invention relates to a vehicle drive device.

### BACKGROUND ART

Conventionally, a vehicle that has a travel mode in which the vehicle runs by using one rotating machine as a power source and a travel mode in which the vehicle runs by using two rotating machines as the power sources is available. In Patent Literature 1, a technique for a hybrid-type vehicle is disclosed, in which an internal combustion engine is stopped and a shortage of drive power QM of an electric motor is compensated by drive power QG of a generator motor when a vehicle speed V is lower than 30 [km/h], and in which the shortage of the drive power QM is compensated by drive power QE of the internal combustion engine when the vehicle speed V is equal to or higher than 30 [km/h].

### RELATED ART LITERATURE

### PATENT LITERATURE

Patent Literature 1: Japanese Patent Application Publication No. 8-295140 (JP 8-295140 A)

### SUMMARY OF THE INVENTION

### PROBLEM TO BE SOLVED BY THE INVENTION

Here, it is desired to suppress fluctuations in output torque when transition from the one travel mode to the other travel mode is made. For example, it is desired to be able to suppress the fluctuations in output torque when transition is made from the travel mode in which the vehicle runs by using the one rotating machine as the power source to the travel mode in which the vehicle runs by using the two rotating machines as the power sources is made.

An object of the invention is to provide a vehicle drive device that can suppress fluctuations in output torque when transition from a travel mode in which a vehicle runs by using one rotating machine as a power source to a travel mode in which a vehicle runs by using two rotating machines as power sources is made.

### MEANS FOR SOLVING THE PROBLEM

A vehicle drive device of the invention includes a first rotating machine and a second rotating machine and sets total torque of a torque command value of the first rotating machine and a torque command value of the second rotating machine to be higher than requested torque for a vehicle when transition from a first travel mode, in which either one of the first rotating machine and the second rotating machine is used as a power source, to a second travel mode, in which the first rotating machine and the second rotating machine are used as the power sources, is made.

In the above vehicle drive device, the torque command value of the rotating machine, which is used as the power source in the first travel mode, during the transition from the first travel mode to the second travel mode is preferably higher than the torque command value before beginning of the transition.

In the above vehicle drive device, the total torque preferably suppresses a decrease in actual output torque with respect to the requested torque during the transition from the first travel mode to the second travel mode.

In the above vehicle drive device, the torque command value of the rotating machine, which is used as the power source in the first travel mode, during the transition from the first travel mode to the second travel mode is preferably set as the requested torque.

In the above vehicle drive device, differential torque between the total torque and the requested torque in a case where a change in a rotational speed of the rotating machine, which newly becomes the power source in the second travel mode, during the transition from the first travel mode to the second travel mode is significant is preferably higher than the differential torque between the total torque and the requested torque in a case where the change in said rotational speed is small.

The above vehicle drive device further includes an engine, a planetary gear mechanism, and a restriction device for restricting rotation of the engine, the first rotating machine is preferably connected to a sun gear of the planetary gear mechanism, the engine is preferably connected to a carrier of the planetary gear mechanism, the second rotating machine and a drive wheel are preferably connected to a ring gear of the planetary gear mechanism, and the rotation of the engine is preferably restricted by the restricting device, so as to execute the second travel mode.

The above vehicle drive device further includes an engine, a planetary gear mechanism, a first clutch, a second clutch, and a brake, the first rotating machine is preferably connected to the engine via the first clutch, the second rotating machine is preferably connected to a sun gear of the planetary gear mechanism, a drive wheel is preferably connected to a carrier of the planetary gear mechanism, the first rotating machine is preferably connected to a ring gear of the planetary gear mechanism via the second clutch, and the brake is preferably engaged to restrict rotation of the ring gear. In the first travel mode, the vehicle preferably runs by using the second rotating machine as the power source while the brake is engaged and the second clutch is disengaged. In the second travel mode, the vehicle preferably runs while the brake is disengaged and the second clutch is engaged.

The above vehicle drive device further includes an engine and a clutch for connecting/disconnecting the engine and a drive wheel, the first rotating machine is preferably connected to a power transmission path at a position closer to the engine than the clutch, and the second rotating machine is preferably connected to the power transmission path at a position closer to the drive wheel than the clutch. In the first travel mode, the vehicle preferably runs while the clutch is disengaged and the second rotating machine is used as the power source. In the second travel mode, the vehicle preferably runs while the clutch is engaged.

In the above vehicle drive device, the total torque preferably maintains a rotational speed of the carrier during the transition from the first travel mode to the second travel mode.

In the above vehicle drive device, the total torque is preferably set higher than the requested torque in a period from the beginning of the transition until a specified period elapses, the transition being made from the first travel mode to the second travel mode.

### EFFECT OF THE INVENTION

The vehicle drive device according to the invention sets the total torque of the torque command value of the first rotating machine and the torque command value of the second rotating machine to be higher than the requested torque for the vehicle when the transition from the first travel mode, in which either one of the first rotating machine and the second rotating machine is used as the power source, to the second travel mode, in which the first rotating machine and the second rotating machine are used as the power sources, is made. The vehicle drive device according to the invention exerts such an effect that fluctuations in output torque during transition from a travel mode, in which a vehicle runs by using one rotating machine as a power source, to a travel mode, in which the vehicle runs by using two rotating machines as the power sources can be suppressed.

### BRIEF DESCRIPTION OF THE DRAWINGS

[FIG. 1] FIG. 1 is a schematic configuration diagram of a vehicle according to a first embodiment.
[FIG. 2] FIG. 2 is a view that shows an operational engagement table of the vehicle according to the first embodiment.
[FIG. 3] FIG. 3 is a collinear diagram according to an MG1 single drive mode.
[FIG. 4] FIG. 4 is a collinear diagram according to an MG2 single drive mode.
[FIG. 5] FIG. 5 is a collinear diagram according to a transition time to a second travel mode.
[FIG. 6] FIG. 6 is a collinear diagram according to the second travel mode.
[FIG. 7] FIG. 7 is a time chart according to torque control in the case where requested torque of the first embodiment is constant.
[FIG. 8] FIG. 8 is another time chart according to the torque control in the case where the requested torque of the first embodiment is constant.
[FIG. 9] FIG. 9 is a time chart according to torque control in the case where the requested torque of the first embodiment is increased.
[FIG. 10] FIG. 10 is a time chart according to torque control in the case where the requested torque of the first embodiment is decreased.
[FIG. 11] FIG. 11 is a schematic configuration diagram of a vehicle according to a first modified example of the first embodiment.
[FIG. 12] FIG. 12 is a schematic configuration diagram of a vehicle according to a second modified example of the first embodiment.
[FIG. 13] FIG. 13 is a schematic configuration diagram of a vehicle according to a second embodiment.
[FIG. 14] FIG. 14 is a view that shows an operational engagement table of the vehicle according to the second embodiment.
[FIG. 15] FIG. 15 is a collinear diagram according to a first travel mode of the second embodiment.
[FIG. 16] FIG. 16 is a collinear diagram according to a second travel mode of the second embodiment.
[FIG. 17] FIG. 17 is a time chart according to torque control in the case where requested torque of the second embodiment is constant.
[FIG. 18] FIG. 18 is a time chart according to torque control in the case where the requested torque of the second embodiment is increased.
[FIG. 19] FIG. 19 is a time chart according to torque control in the case where the requested torque of the second embodiment is decreased.
[FIG. 20] FIG. 20 is a schematic configuration diagram of a vehicle according to a third embodiment.
[FIG. 21] FIG. 21 is a view that shows an operational engagement table of the vehicle according to the third embodiment.
[FIG. 22] FIG. 22 is a collinear diagram according to a first travel mode of the third embodiment.
[FIG. 23] FIG. 23 is a collinear diagram according to a second travel mode of the third embodiment.
[FIG. 24] FIG. 24 is a time chart according to torque control in the case where requested torque of the third embodiment is constant.
[FIG. 25] FIG. 25 is a time chart according to torque control in the case where the requested torque of the third embodiment is increased.
[FIG. 26] FIG. 26 is a time chart according to torque control in the case where the requested torque of the third embodiment is decreased.

### MODES FOR CARRYING OUT THE INVENTION

A detailed description will hereinafter be made on a vehicle drive device according to embodiments of the invention with reference to the drawings. It should be noted that this invention is not limited to these embodiments. In addition, as components in the following embodiments, those that can easily be assumed by persons skilled in the art or the substantially same components are included.

### [First Embodiment]

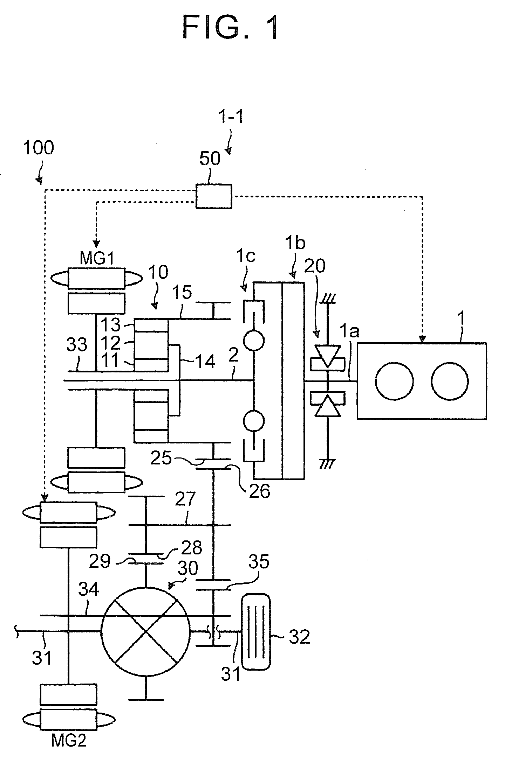

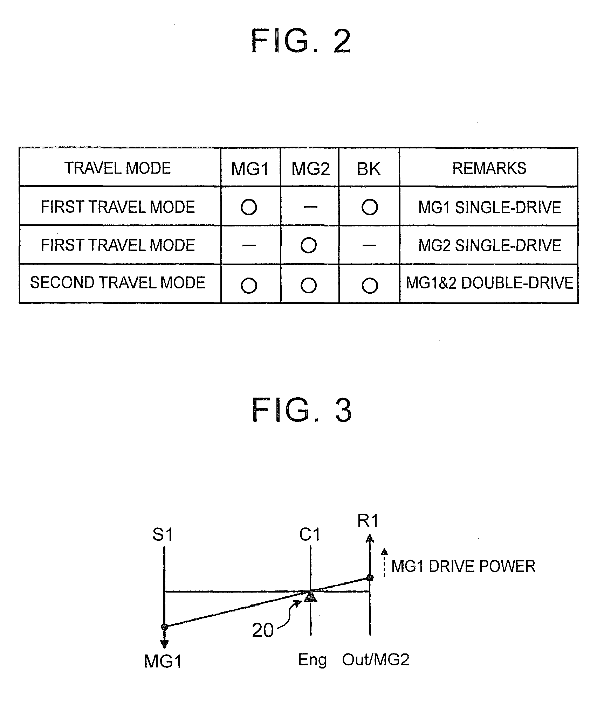

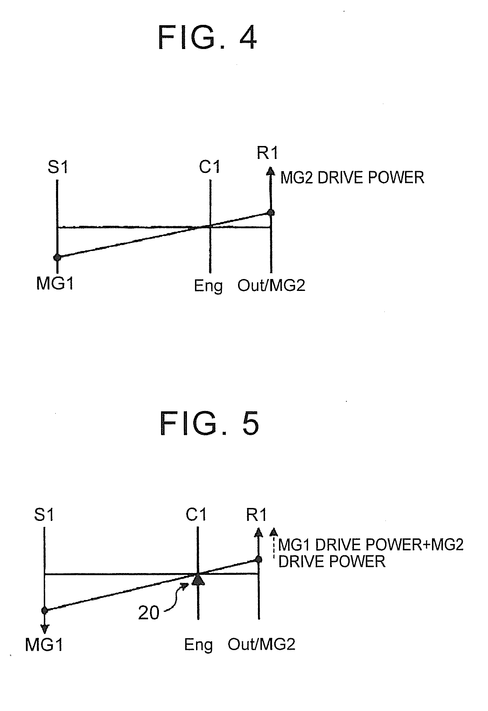

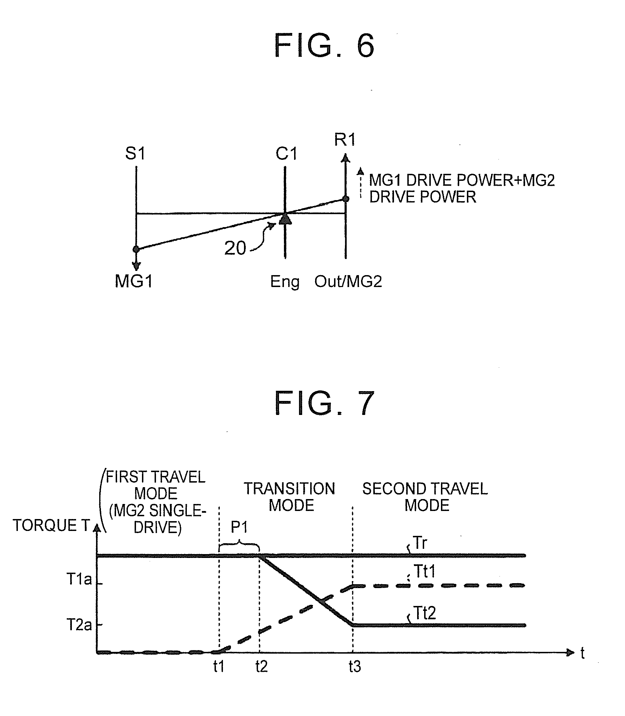

A description will be made on a first embodiment with reference to FIG. 1 to FIG. 10. This embodiment relates to a vehicle drive device. FIG. 1 is a schematic configuration diagram of a vehicle according to the first embodiment, FIG. 2 is a view that shows an operational engagement table of the vehicle according to the first embodiment, FIG. 3 is a collinear diagram according to an MG1 single drive mode, FIG. 4 is a collinear diagram according to an MG2 single drive mode, FIG. 5 is a collinear diagram according to a transition time to a second travel mode, and FIG. 6 is a collinear diagram according to the second travel mode.

As shown in FIG. 1, a vehicle 100 is a hybrid (HV) vehicle that has an engine 1, a first rotating machine MG1, and a second rotating machine MG2 as power sources. The vehicle 100 may be a plug-in hybrid (PHV) vehicle that can be charged by an external electric power supply. The vehicle 100 is configured by including a planetary gear mechanism 10, a one-way clutch 20, and a drive wheel 32 in addition to the above power sources.

In addition, a vehicle drive device 1-1 according to this embodiment is configured by including the engine 1, the first rotating machine MG1, the second rotating machine MG2, the planetary gear mechanism 10, and the one-way clutch 20. The vehicle drive device 1-1 may be configured by further including an ECU 50. The vehicle drive device 1-1 can be applied to an FF (front-engine front-wheel-drive) vehicle, an RR (rear-engine rear-wheel-drive) vehicle, and the like. For example, the vehicle drive device 1-1 is installed in the vehicle 100 such that an axial direction thereof aligns with a vehicle width direction.

The engine 1 as an engine converts combustion energy of fuel into rotational motion of a rotational shaft 1a to output. A flywheel 1b is coupled to the rotational shaft 1a. The flywheel 1b is connected to an input shaft 2 via a damper 1c. The damper 1c transmits power between the flywheel 1b and the input shaft 2 via an elastic body such as a spring. The input shaft 2 is coaxially arranged with the rotational shaft 1a of the engine 1 and also arranged on an extension of the rotational shaft 1a. The input shaft 2 is connected to a carrier 14 of the planetary gear mechanism 10.

The planetary gear mechanism 10 is a single pinion type and has a sun gear 11, a pinion gear 12, a ring gear 13, and the carrier 14. The ring gear 13 is coaxially arranged with the sun gear 11 and also arranged on a radially outer side of the sun gear 11. The pinion gear 12 is arranged between the sun gear 11 and the ring gear 13 and meshes with each of the sun gear 11 and the ring gear 13. The pinion gear 12 is supported by the carrier 14 in a freely rotatable manner. The carrier 14 is coupled to the input shaft 2 and integrally rotates with the input shaft 2. Thus, together with the input shaft 2, the pinion gear 12 can turn (revolve) around a center axis of the input shaft 2 and also can turn (rotate) around a center axis of the pinion gear 12 by being supported by the carrier 14.

A rotational shaft 33 of the first rotating machine MG1 is connected to the sun gear 11. A rotor of the first rotating machine MG1 is connected to the sun gear 11 via the rotational shaft 33 and integrally rotates with the sun gear 11. A counter drive gear 25 is connected to the ring gear 13. The counter drive gear 25 is an output gear that integrally rotates with the ring gear 13. The counter drive gear 25 is provided on an outer peripheral surface of a cylindrical member 15 in a cylindrical shape, and the ring gear 13 is provided on an inner peripheral surface thereof.

The counter drive gear 25 meshes with a counter driven gear 26. The counter driven gear 26 is connected to a drive pinion gear 28 via a counter shaft 27. The counter driven gear 26 and the drive pinion gear 28 rotate integrally. In addition, a reduction gear 35 meshes with the counter driven gear 26. The reduction gear 35 is connected to a rotational shaft 34 of the second rotating machine MG2. In other words, rotation of the second rotating machine MG2 is transmitted to the counter driven gear 26 via the reduction gear 35. The reduction gear 35 has a smaller diameter than the counter driven gear 26, reduces a speed of the rotation of the second rotating machine MG2, and transmits it to the counter driven gear 26.

The drive pinion gear 28 meshes with a differential ring gear 29 of a differential 30. The differential is connected to the drive wheels 32 via right and left drive shafts 31. The ring gear 13 is connected to the drive wheel 32 via the counter drive gear 25, the counter driven gear 26, the drive pinion gear 28, the differential 30, and the drive shaft 31. In addition, the second rotating machine MG2 is connected to a power transmission path between the ring gear 13 and the drive wheel 32 and can transmit power to each of the ring gear 13 and the drive wheel 32.

Each of the first rotating machine MG1 and the second rotating machine MG2 has a function as a motor (an electric motor) and a function as a generator. The first rotating machine MG1 and the second rotating machine MG2 are connected to a battery via an inverter. The first rotating machine MG1 and the second rotating machine MG2 can convert electric power that is supplied from the battery into mechanical power to output, and can also convert the mechanical power into the electric power by being driven by the input power. The electric power generated by the rotating machines MG1, MG2 can be stored in the battery. As the first rotating machine MG1 and the second rotating machine MG2, for example, an AC synchronous motor generator can be used.

In the vehicle 100 of this embodiment, the one-way clutch 20, the flywheel 1b, the damper 1c, the counter drive gear 25, the planetary gear mechanism 10, and the first rotating machine MG1 are coaxially arranged with the engine 1 in this order from the nearest side to the engine 1. In addition, the vehicle drive device 1-1 of this embodiment is a double-axis type in which the input shaft 2 and the rotational shaft 34 of the second rotating machine MG2 are arranged on different axes.

The one-way clutch 20 is provided on the rotational shaft 1a of the engine 1. The one-way clutch 20 is a restriction device that restricts rotation of the engine 1. The one-way clutch 20 permits rotation of the rotational shaft 1a in a positive direction during an operation of the engine 1 in the case where a rotational direction of the rotational shaft 1a is set as the positive direction, and restricts the rotation thereof in a negative direction.

The ECU 50 has a function as a controller for controlling the vehicle 100. The ECU 50 is an electronic control unit that has a computer, and controls the engine 1, the first rotating machine MG1, and the second rotating machine MG2. In addition, the ECU 50 receives signals indicative of various types of information, such as information on the engine 1, information on the first rotating machine MG1, information on the second rotating machine MG2, information on a vehicle speed, information on the battery, and information on operation input to operation equipment such as an accelerator pedal operation amount.

On the basis of requested torque for the vehicle 100 (hereinafter, may simply be referred to as "requested torque"), the ECU 50 determines command values of torque output by the engine 1 (hereinafter, may simply be referred to as "engine torque"), torque output by the first rotating machine MG1 (hereinafter, may simply be referred to as "MG1 torque"), and torque output by the second rotating machine MG2 (hereinafter, may simply be referred to as "MG2 torque"). The ECU 50 outputs the command value of the engine torque, the command value of the MG1 torque, and the command value of the MG2 torque. The engine 1 is, for example, controlled by an engine ECU so as to realize the command value of the engine torque. The first rotating machine MG1 and the second rotating machine MG2 are, for example, controlled by an MG_ECU so as to realize the command value of the MG1 torque and the command value of the MG2 torque, respectively.

The vehicle 100 can selectively implement a hybrid (HV) travel or an EV travel. The HV travel is a travel mode in which the vehicle 100 runs by using the engine 1 as the power source. In addition to the engine 1, the second rotating machine MG2 may further be used as the power source in the HV travel. In the HV travel, the first rotating machine MG1 outputs reaction torque and functions as a reaction receiver with respect to the engine torque. Accordingly, the engine torque is output from the ring gear 13 and transmitted to the drive wheel 32.

The EV travel is a travel mode in which at least one of the first rotating machine MG1 and the second rotating machine MG2 is used as the power source. In the EV travel, the vehicle can run while the engine 1 is stopped. As the EV travel modes, a power transmission device 1-1 according to this embodiment has: a first travel mode in which the vehicle 100 runs by using the first rotating machine MG1 or the second rotating machine MG2 as the independent power source (a single-drive EV mode); and a second travel mode in which the vehicle 100 runs by using the first rotating machine MG1 and the second rotating machine MG2 as the power sources (a double-drive EV mode). It should be noted that, in this specification, the EV travel mode in which the first rotating machine MG1 is used as the independent power source is also described as "MG1 single-drive EV mode" and the EV travel mode in which the second rotating machine MG2 is used as the independent power source is also described as "MG2 single-drive EV mode".

In FIG. 2, a symbol O in an "MG1" column indicates that the first rotating machine MG1 is used as the power source and a symbol O in an "MG2" column indicates that the second rotating machine MG2 is used as the power source. In addition, a symbol O in a "BK" column indicates that the one-way clutch 20 is in an engaged state. As shown in FIG. 2, in the MG1 single-drive EV mode, the vehicle runs while the first rotating machine MG1 is used as the power source and the one-way clutch 20 is in the engaged state. In collinear diagrams of FIG. 3 onward according to the first embodiment, an S1-axis indicates a rotational speed of the sun gear 11, a C1-axis indicates a rotational speed of the carrier 14, and an R1-axis indicates a rotational speed of the ring gear 13. As shown in FIG. 3, in the MG1 single-drive EV mode, the first rotating machine MG1 outputs negative torque to make negative rotation during a forward travel. Accordingly, the one-way clutch 20 is engaged, and rotation of the carrier 14 is restricted.

The carrier 14 functions as the reaction receiver with respect to the torque of the first rotating machine MG1 and causes the ring gear 13 to output positive torque. It should be noted that the positive torque is torque in a positive rotational direction. A rotational direction of the ring gear 13 during the forward travel of the vehicle 100 is the positive rotational direction. The MG1 torque that is transmitted from the ring gear 13 to the drive wheel 32 generates drive power for driving the vehicle 100 in a forward travel direction.

As shown in FIG. 2, the second rotating machine MG2 is used as the power source in the MG2 single-drive EV mode. The one-way clutch 20 may be in either the engaged state or a disengaged state. As shown in FIG. 4, in the MG2 single-drive EV mode, the rotational speeds of the carrier 14 and the engine 1 are 0, and the first rotating machine MG1 rotates idle.

When transition from the first travel mode to the second travel mode is made, the vehicle drive device 1-1 can make transition from the first travel mode to the second travel mode through a transition mode. The transition mode is a mode in which each of the MG1 torque and the MG2 torque is changed to become torque to be shared in the second travel mode. The ECU 50 calculates the torque to be shared by each of the first rotating machine MG1 and the second rotating machine MG2 in the second travel mode by using a predetermined calculation method. In the transition mode, the ECU 50 changes each of the MG1 torque and the MG2 torque to become the torque to be shared in the second travel mode.

FIG. 5 shows a collinear diagram according to the transition mode when transition from the MG2 single-drive mode to the second travel mode is made. In the transition mode, the ECU 50 changes the torque of the first rotating machine MG1, which is the rotating machine to newly become the power source in the second travel mode, to become the torque to be shared in the second travel mode. In addition, in the transition mode, the ECU 50 changes the torque of the second rotating machine MG2, which has been the power source in the MG2 single-drive EV mode, to become the torque to be shared in the second travel mode. The ECU 50 calculates the MG1 torque to be shared by the first rotating machine MG1 and the MG2 torque to be shared by the second rotating machine MG2 in the second travel mode in accordance with a magnitude of the requested torque and various conditions on the vehicle speed and the like, for example. In the transition mode, the ECU 50 determines the command value of the MG1 torque in the transition mode so as to change the MG1 torque to become the torque to be shared by the first rotating machine MG1 in the second travel mode. In addition, in the transition mode, the ECU 50 determines the command value of the MG2 torque in the transition mode so as to change the MG2 torque to become the torque to be shared by the second rotating machine MG2 in the second travel mode.

As shown in FIG. 5, the negative torque is output from the first rotating machine MG1 in the transition mode, and thus the one-way clutch 20 is engaged and causes the ring gear 13 to output the MG1 torque. Accordingly, the vehicle 100 starts the travel by using the drive power by the torque of the first rotating machine MG1 and the drive power by the torque of the second rotating machine MG2. In other words, the vehicle drive device 1-1 restricts the rotation of the engine 1 by the one-way clutch 20 and implements the second travel mode.

The transition to the second travel mode is completed when each of the MG1 torque and the MG2 torque is changed to become the torque to be shared in the second travel mode. In the second travel mode shown in FIG. 6, the MG1 torque and the MG2 torque have respectively become the torque to be shared by the first rotating machine MG1 and the torque to be shared by the second rotating machine MG2 in the second travel mode, and output torque that is requested to the vehicle 100 (the requested torque) is thereby realized.

Here, it is desired to be able to suppress fluctuations in torque during the transition from the first travel mode to the second travel mode. Even when the output of the torque is commanded to the rotating machine that newly becomes the power source in the second travel mode (for example, the first rotating machine MG1 in a case where the transition from the MG2 single-drive EV mode to the second travel mode is made), a delay occurs in actual transmission of the MG1 torque to the drive wheel 32. This problem is produced by inertia torque, for example. For example, the first rotating machine MG1 is connected to the flywheel 1b via the damper 1c. In the case where the first rotating machine MG1 starts outputting the MG1 torque as the new power source, a delay occurs by the inertia torque of the flywheel 1b or the first rotating machine MG1 itself in a period from a time at which the MG1 torque starts being output to a time at which the MG1 torque is actually output to the drive wheel 32. Accordingly, the fluctuations in torque occur, in which the output torque of the vehicle 100 is changed to a shortage side with respect to the requested torque, and unintended shock by a driver is possibly produced. In addition, the delay possibly occurs by rattling of the one-way clutch 20 or twisting of the damper 1c in the period from the time at which the MG1 torque starts being output to the time at which the MG1 torque is actually output to the drive wheel 32.

The vehicle drive device 1-1 according to this embodiment sets total torque of the command value of the torque of the first rotating machine MG1 and the command value of the torque of the second rotating machine MG2 to be higher than the requested torque for the vehicle 100 when the transition from the first travel mode to the second travel mode is made. Accordingly, the fluctuations in output torque during the transition from the first travel mode to the second travel mode are suppressed.

Fig. 7 is a time chart according to torque control in the case where the requested torque of the first embodiment is constant. In FIG. 7, a vertical axis indicates torque. It should be noted that each torque in FIG. 7 is a value that is converted to the torque on the same shaft and is a value that is converted to the torque on the drive shaft 31 in this embodiment. Requested torque Tr is the requested torque for the vehicle 100 and a command value of torque that is output to the drive shaft 31. An MG1 torque command value Tt1 is output to the first rotating machine MG1 and the command value of the MG1 torque. An MG2 torque command value Tt2 is output to the second rotating machine MG2 and is the command value of the MG2 torque.

FIG. 7 shows the MG1 torque command value Tt1 and the MG2 torque command value Tt2 when the requested torque Tr is constant. A determination on the transition from the MG2 single-drive EV mode to the second travel mode is made, and then the transition to the second travel mode is started at time t1. As shown in FIG. 7, total torque of the MG1 torque command value Tt1 and the MG2 torque command value Tt2 is set higher than the requested torque Tr from the beginning of the transition to the second travel mode until a specified period P1 elapses. This total torque suppresses a decrease in the actual output torque with respect to the requested torque Tr during the transition from the first travel mode to the second travel mode.

In this embodiment, the MG1 torque command value Tt1 is gradually increased from the time t1. The ECU 50 changes the MG1 torque command value Tt1 to become torque T1a to be shared by the first rotating machine MG1 in the second travel mode. Meanwhile, the MG2 torque command value Tt2 is set to be the requested torque Tr from the time t1 until the specified period P1 elapses. In other words, the MG1 torque command value Tt1 and the MG2 torque command value Tt2 in the specified period P1 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. Accordingly, a shortage of the output torque, which is caused by the delay in the MG1 torque, is compensated by the MG2 torque. It should be noted that the MG2 torque command value Tt2 in the specified period P1 may be set as torque in a specified range including the requested torque Tr, instead of matching the requested torque Tr.

Since the total torque of the MG1 torque command value Tt1 and the MG2 torque command value Tt2 is higher than the requested torque Tr in the specified period P1, the fluctuations in output torque in an initial stage of the transition to the second travel mode are suppressed. The specified period P1 is defined as a period in which the delay in the torque of the rotating machine that newly becomes the power source occurs. The specified period P1 may be set as a period from the beginning of the transition to the second travel mode until the MG1 torque actually starts being transmitted to the drive wheel 32, for example. The specified period P1 may be set as a period from the beginning of the transition to the second travel mode until torque, a magnitude of which corresponds to the MG1 torque command value Tt1, starts being transmitted to the drive wheel 32, for example.

The specified period P1 may be a constant value or a variable. As one example, the specified period P1 may be variable in accordance with the rotational speed or the torque of each of the rotating machines MG1, MG2. For example, when the first rotating machine MG1 newly becomes the power source in the second travel mode, the specified period P1 may be determined in accordance with the MG1 rotational speed or the torque to be shared by the first rotating machine MG1 in the second travel mode. When the specified period P1 varies in accordance with the MG1 rotational speed, the specified period P1 in the case where the MG1 rotational speed is high may be set longer than the specified period P1 in the case where the MG1 rotational speed is low. Accordingly, the specified period P1 can be defined in accordance with the inertia torque that is changed in accordance with the rotational speed.

When the specified period P1 elapses, the MG2 torque command value Tt2 starts being changed. The ECU 50 changes the MG2 torque command value Tt2 to become torque T2a to be shared by the second rotating machine MG2 in the second travel mode from time t2 at which the specified period P1 has elapsed. The MG1 torque starts being transmitted to the drive wheel 32 at the time t2. Thus, even when the MG2 torque is decreased, the fluctuations in output torque are less likely to occur. The ECU 50 reduces discrepancy between the total torque of the MG1 torque command value Tt1 and the MG2 torque command value Tt2 and the requested torque Tr at the time t2 onward. The ECU 50 reduces the above discrepancy to 0 by time t3 at which the transition to the second travel mode is completed.

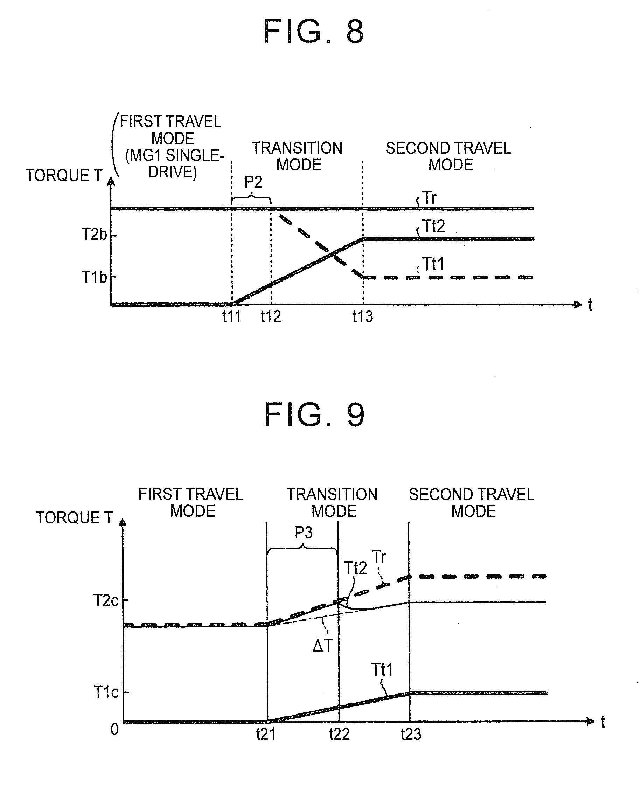

FIG. 8 is another time chart according to the torque control in the case where the requested torque of the first embodiment is constant. FIG. 8 shows the time chart when the requested torque Tr is constant and the transition from the MG1 single-drive EV mode to the second travel mode is made. The transition to the second travel mode is started at time t11. The total torque of the MG1 torque command value Tt1 and the MG2 torque command value Tt2 is set higher than the requested torque Tr from the beginning of the transition to the second travel mode until a specified period P2 elapses. This total torque suppresses the decrease in the actual output torque with respect to the requested torque Tr during the transition from the first travel mode to the second travel mode.

The MG2 torque command value Tt2 is gradually increased from the time t11 to become torque T2b to be shared by the second rotating machine MG2 in the second travel mode. The MG1 torque command value Tt1 until time t12 at which the specified period P2 elapses is the same torque as the requested torque Tr. Accordingly, the MG1 torque command value Tt1 and the MG2 torque command value Tt2 in the specified period P2 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr.

The MG1 torque command value Tt1 starts being changed from the time t12 at which the specified period P2 has elapsed. The ECU 50 changes the MG1 torque command value Tt1 from the time t12 to become torque T1b to be shared by the first rotating machine MG1 in the second travel mode. The transition to the second travel mode is completed at time t13, and the total torque of the MG1 torque command value Tt1 and the MG2 torque command value Tt2 matches the requested torque Tr.

FIG. 9 is a time chart according to torque control in the case where the requested torque of the first embodiment is increased. FIG. 9 shows the time chart in the case where the transition from the MG2 single-drive EV mode to the second travel mode is made when the requested torque Tr is increased. The transition to the second travel mode is started at time t21. The total torque of the MG1 torque command value Tt1 and the MG2 torque command value Tt2 is set higher than the requested torque Tr from the beginning of the transition to the second travel mode until a specified period P3 elapses. In other words, the MG1 torque command value Tt1 and the MG2 torque command value Tt2 in the specified period P3 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. The above total torque suppresses the decrease in the actual output torque with respect to the requested torque during the transition from the first travel mode to the second travel mode.

In FIG. 9, differential torque ΔT is torque of a difference between the requested torque Tr and the MG1 torque command value Tt1. When the transition mode is started, the MG2 torque command value Tt2 is set as higher torque than the differential torque ΔT. Accordingly, the fluctuations in output torque at the beginning of the transition to the second travel mode are suppressed. In this embodiment, the MG2 torque command value Tt2 in the specified period P3 is set as torque with the same magnitude as the requested torque Tr.

In addition, the torque command value of the second rotating machine MG2, which has been the power source in the MG2 single-drive EV mode before the transition, in the transition mode may be set higher than the torque command value before the beginning of the transition. In this way, the decrease in the actual output torque with respect to the requested torque Tr can be suppressed, and responsiveness to the driver's request can be improved.

The ECU 50 reduces the discrepancy between the MG2 torque command value Tt2 and the differential torque ΔT from time t22 at which the specified period P3 has elapsed. At this time, it is preferred that the discrepancy is significantly reduced in the initial stage and the reduction amount is gradually reduced thereafter. In other words, the MG2 torque command value Tt2 is preferably changed such that a curve indicative of transition in the MG2 torque command value Tt2 is projected to a horizontal axis side. Accordingly, it is possible to suppress the actual output torque from overshooting with respect to the requested torque Tr. When the MG1 torque command value Tt1 becomes torque T1c to be shared by the first rotating machine MG1 in the second travel mode and the MG2 torque command value Tt2 becomes torque T2c to be shared by the second rotating machine MG2 in the second travel mode, the transition to the second travel mode is completed. In FIG. 9, the transition to the second travel mode is completed at time t23.

It should be noted that the same torque control as described above can be executed in the case where the transition from the MG1 single-drive EV mode to the second travel mode is made when the requested torque Tr is increased. In this case, the torque control, in which the MG1 torque command value Tt1 and the MG2 torque command value Tt2 are switched in FIG. 9, can be executed.

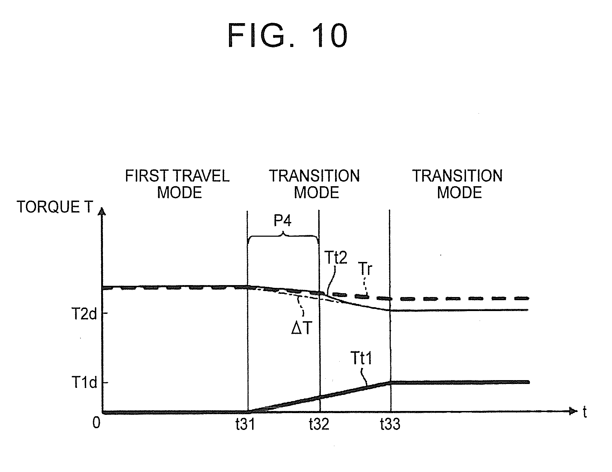

FIG. 10 is a time chart according to torque control in the case where the requested torque of the first embodiment is decreased. FIG. 10 shows the time chart in the case where the transition from the MG2 single-drive EV mode to the second travel mode is made when the requested torque Tr is decreased. The transition to the second travel mode is started at time t31. The total torque of the MG1 torque command value Tt1 and the MG2 torque command value Tt2 is set higher than the requested torque Tr from the beginning of the transition to the second travel mode until a specified period P4 elapses. In other words, the MG1 torque command value Tt1 and the MG2 torque command value Tt2 in the specified period P4 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. The above total torque suppresses the decrease in the actual output torque with respect to the requested torque Tr during the transition to the first travel mode to the second travel mode.

In FIG. 10, the differential torque ΔT is the torque of the difference between the requested torque Tr and the MG1 torque command value Tt1. When the transition mode is started, the MG2 torque command value Tt2 is set as the higher torque than the differential torque ΔT. Accordingly, the fluctuations in output torque at the beginning of the transition to the second travel mode are suppressed. In this embodiment, the MG2 torque command value Tt2 in the specified period P4 is set as the torque with the same magnitude as the requested torque Tr.

The ECU 50 reduces the discrepancy between the MG2 torque command value Tt2 and the differential torque ΔT from time t32 at which the specified period P4 has elapsed. At this time, it is preferred that the discrepancy is significantly reduced in the initial stage and the reduction amount is gradually reduced thereafter. In other words, the MG2 torque command value Tt2 is preferably changed such that the curve indicative of the transition in the MG2 torque command value Tt2 is projected to the horizontal axis side. Accordingly, it is possible to suppress the actual output torque from overshooting with respect to the requested torque Tr. When the MG1 torque command value Tt1 becomes torque T1d to be shared by the first rotating machine MG1 in the second travel mode and the MG2 torque command value Tt2 becomes torque T2d to be shared by the second rotating machine MG2 in the second travel mode, the transition to the second travel mode is completed. In FIG. 10, the transition to the second travel mode is completed at time t33.

It should be noted that the same torque control as described above can be executed in the case where the transition from the MG1 single-drive EV mode to the second travel mode is made when the requested torque Tr is decreased. In this case, the torque control, in which the MG1 torque command value Tt1 and the MG2 torque command value Tt2 are switched in FIG. 10, can be executed.

As it has been described so far, according to the vehicle drive device 1-1 according to this embodiment, the fluctuations in output torque during the transition from the first travel mode to the second travel mode are suppressed. When the transition from the first travel mode to the second travel mode is made, the ECU 50 appropriately maintains the torque command value of the rotating machine, which has been the power source in the first travel mode, in accordance with the requested torque Tr, increases the torque command value, and suppresses the decrease therein. For example, when the transition from the MG2 single-drive EV mode to the second travel mode is made, the ECU 50 maintains the MG2 torque command value Tt2, increases the MG2 torque command value Tt2, or suppresses the decrease in the MG2 torque command value Tt2 in the transition mode.

In the case where the requested torque Tr is constant, the ECU 50 maintains the MG2 torque command value Tt2 in the transition mode to the torque command value thereof before the beginning of the transition, and thereby suppresses the fluctuations in output torque. In the case where the requested torque Tr is increased, the ECU 50 increases the MG2 torque command value Tt2 in the transition mode, and thereby suppresses the fluctuations in output torque. In the case where the requested torque Tr is decreased, the ECU 50 suppresses the decrease in the MG2 torque command value Tt2 in the transition mode, and thereby suppresses the fluctuations in output torque. Accordingly, the vehicle drive device 1-1 according to this embodiment can suppress the fluctuations in output torque by compensating for the delay in the torque of the rotating machine, which newly becomes the power source in the second travel mode, by the torque of the other rotating machine.

It should be noted that the total torque of the MG1 torque command value Tt1 and the MG2 torque command value Tt2 in the specified period may be variable in accordance with a condition. For example, the differential torque between the above total torque and the requested torque Tr (a magnitude by which a magnitude of the total torque exceeds a magnitude of the requested torque Tr) in the case where a change in the rotational speed of the rotating machine, which newly becomes the power source in the second travel mode, during the transition from the first travel mode to the second travel mode is significant may be set higher than the differential torque between the above total torque and the requested torque Tr in the case where the change in the rotational speed is small. As one example, when the transition from the MG2 single-drive EV mode to the second travel mode is made, the differential torque in the case where a change in the MG1 rotational speed during the transition from the MG2 single-drive EV mode to the second travel mode is significant may be set higher than the differential torque in the case where the change in the MG1 rotational speed is small.

When the transition to the second travel mode is made, the inertia torque is generated by backlash generated in a rotational element, to which the rotating machine, which newly becomes the power source, is connected, (for example, the sun gear 11 with respect to the first rotating machine MG1) or the change in the rotational speed of the rotating machine which occurs after the torque output by the rotating machine (after the mode is switched, after an engagement device is engaged, or the like). The inertia torque becomes a higher value and possibly causes the delay in the torque as the change in the rotational speed of the rotating machine is increased. To handle this, the delay in the torque can be suppressed by increasing the differential torque in accordance with the change in the rotational speed of the rotating machine, which newly becomes the power source by the mode transition, during the mode transition (for example, the change in the rotational speed until termination of the transition mode, the change in the rotational speed in the specified period, or the like).

It should be noted that the total torque of the MG1 torque command value Tt1 and the MG2 torque command value Tt2 may exceed an output torque command value in the torque control. The output torque command value is determined on the basis of the requested torque Tr and is a target value of the torque that is output to the drive wheel 32 by the first rotating machine MG1 and the second rotating machine MG2.

The vehicle 100, in which the vehicle drive device 1-1 is installed, is not limited to the one that is exemplified. For example, the vehicle 100 may be a vehicle other than the hybrid vehicle. The vehicle drive device 1-1 according to this embodiment can be applied to various types of vehicles, in each of which the first rotating machine MG1 and the second rotating machine MG2 are installed.

### [First Modified Example of First Embodiment]

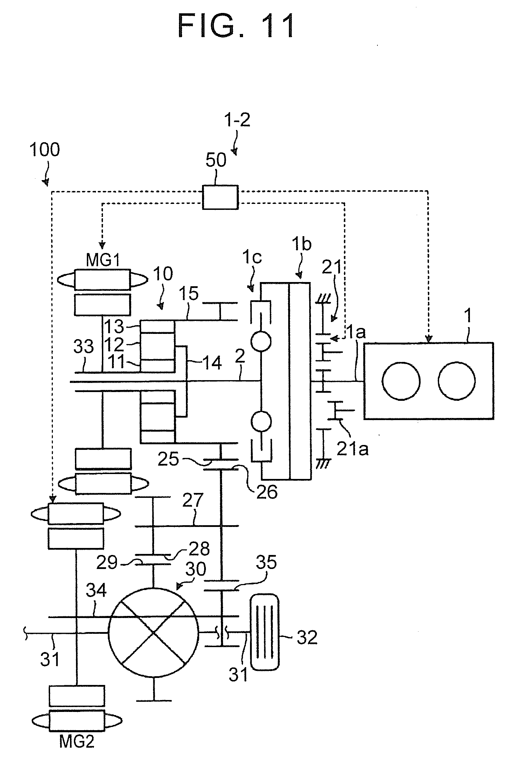

A description will be made on a first modified example of the first embodiment. Instead of the one-way clutch 20 of the above first embodiment, a dog brake 21 may be used as the restriction device. FIG. 11 is a schematic configuration diagram of a vehicle according to the first modified example of the first embodiment. A vehicle drive device 1-2 of the vehicle 100 according to the first modified example includes the dog brake 21 instead of the one-way clutch 20.

The dog brake 21 is a brake device of a meshing type. The dog brake 21 can be switched between an engaged state for restricting the rotation of the rotational shaft 1a of the engine 1 and a disengaged state for permitting the rotation of the rotational shaft 1a by moving a sleeve 21a in the axial direction. The dog brake 21 in the engaged state couples the rotational shaft 1a to a vehicle body side and restricts the rotation of the rotational shaft 1a. The dog brake 21 in the disengaged state cancels coupling of the rotational shaft 1a to the vehicle body side and permits the rotation of the rotational shaft 1a.

The dog brake 21 is controlled by the ECU 50. In the MG1 single-drive EV mode and the second travel mode, the ECU 50 brings the dog brake 21 into the engaged state. When the dog brake 21 is engaged, the rotation of the carrier 14, which is coupled to the rotational shaft 1a, is restricted. Accordingly, the carrier 14 functions as the reaction receiver with respect to the MG1 torque and can cause the ring gear 13 to output the MG1 torque. In addition, in the MG2 single-drive EV mode, the ECU 50 brings the dog brake 21 into the disengaged state.

The torque control during the transition from the first travel mode to the second travel mode can be the same as that described in the above first embodiment. For example, when the transition from the MG2 single-drive EV mode to the second travel mode is made, the ECU 50 brings the dog brake 21 into the engaged state and commands the first rotating machine MG1 to output the MG1 torque. The ECU 50 sets the total torque of the MG1 torque command value Tt1 and the MG2 torque command value Tt2 to be higher than the requested torque Tr from the beginning of the command of the torque output for the first rotating machine MG1 until the specified periods P1, P3, P4 elapse.

### [Second Modified Example of First Embodiment]

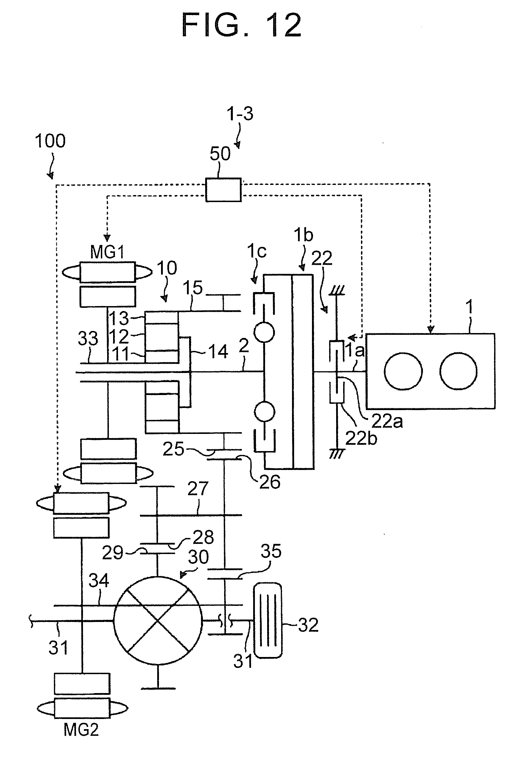

A description will be made on a second modified example of the first embodiment. Instead of the one-way clutch 20 of the above first embodiment, a friction brake 22 may be used as the restriction device. FIG. 12 is a schematic configuration diagram of a vehicle according to the second modified example of the first embodiment. A vehicle drive device 1-3 of the vehicle 100 according to the second modified example includes the friction brake 22 instead of the one-way clutch 20.

The friction brake 22 is a brake device of a friction engagement type. The friction brake 22 has: a friction engagement member 22a that is coupled to the rotational shaft 1a of the engine 1; and a friction engagement member 22b that is coupled to the vehicle body side. The friction brake 22 restricts the rotation of the rotational shaft 1a in the engaged state and permits the rotation of the rotational shaft 1a in the disengaged state.

The friction brake 22 is controlled by the ECU 50. In the MG1 single-drive EV mode and the second travel mode, the ECU 50 brings the friction brake 22 into the engaged state, for example, into a completely engaged state. In the MG2 single-drive EV mode, the ECU 50 brings the friction brake 22 into the disengaged state.

The torque control during the transition from the first travel mode to the second travel mode can be the same as that described in the above first embodiment. For example, when the transition from the MG2 single-drive EV mode to the second travel mode is made, the ECU 50 brings the friction brake 22 into the engaged state and commands the first rotating machine MG1 to output the MG1 torque. The ECU 50 sets the total torque of the MG1 torque command value Tt1 and the MG2 torque command value Tt2 to be higher than the requested torque Tr from the beginning of the command of the torque output for the first rotating machine MG1 until the specified periods P1, P3, P4 elapse.

### [Second Embodiment]

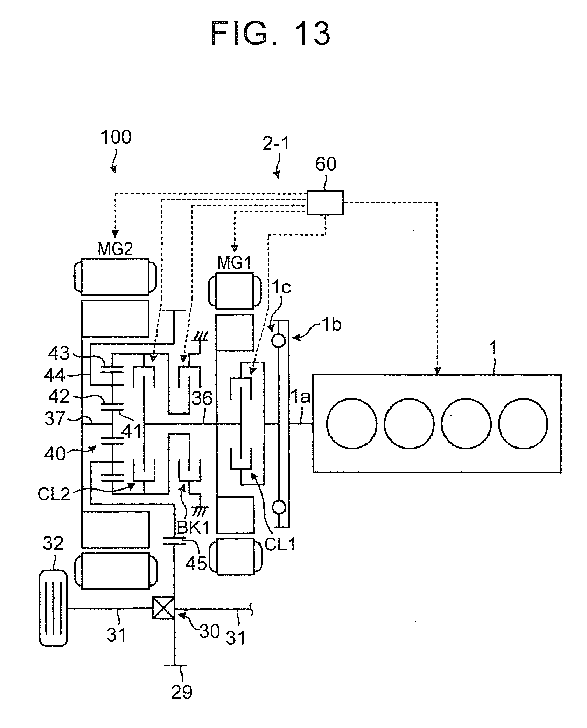

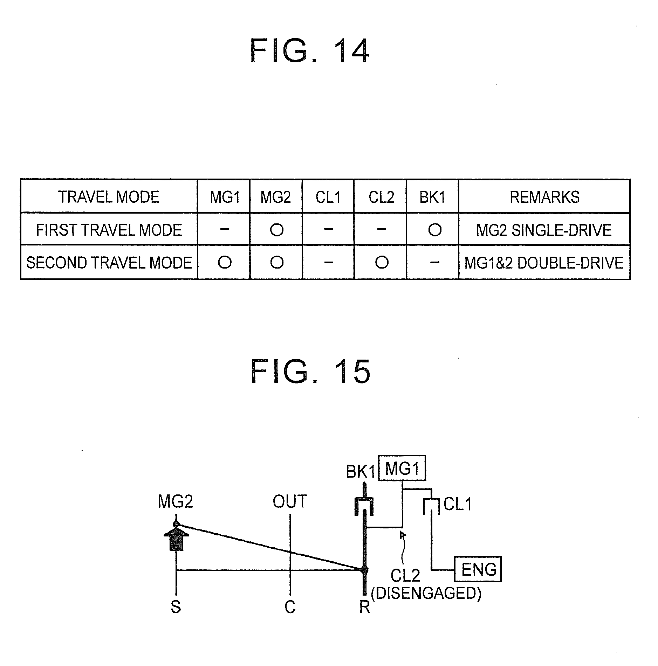

A description will be made on a second embodiment with reference to FIG. 13 to FIG. 19. For the second embodiment, components that have similar functions as those described in the above first embodiment are denoted by the same reference numerals, and the overlapping description will not be made. FIG. 13 is a schematic configuration diagram of a vehicle according to the second embodiment. FIG. 14 is a view that shows an operational engagement table of the vehicle according to the second embodiment.

The vehicle 100 shown in FIG. 13 is the hybrid (HV) vehicle that has the engine 1, the first rotating machine MG1, and the second rotating machine MG2 as the power sources. The vehicle 100 may be the plug-in hybrid (PHV) vehicle that can be charged by the external electric power supply. The vehicle 100 is configured by including a planetary gear mechanism 40, a first clutch CL1, a second clutch CL2, and a brake BK1 in addition to the above power sources.

In addition, a vehicle drive device 2-1 according to this embodiment is configured by including the first rotating machine MG1, the second rotating machine MG2, the engine 1, the planetary gear mechanism 40, the first clutch CL1, the second clutch CL2, and the brake BK1. The vehicle drive device 2-1 may be configured by further including an ECU 60.

A rotational shaft 36 of the first rotating machine MG1 is connected to the rotational shaft 1a of the engine 1 via the first clutch CL1, the damper 1c, and the flywheel 1b. The planetary gear mechanism 40 is a single pinion type and has a sun gear 41, a pinion gear 42, a ring gear 43, and a carrier 44.

A rotational shaft 37 of the second rotating machine MG2 is connected to the sun gear 41. An output gear 45 is connected to the carrier 44. The output gear 45 meshes with the differential ring gear 29 of the differential 30. The differential 30 is connected to the drive wheels 32 via the right and left drive shafts 31. The first rotating machine MG1 is connected to the ring gear 43 via the second clutch CL2. Each of the first clutch CL1 and the second clutch CL2 can be the friction engagement type, for example.

The brake BK1 is engaged to restrict rotation of the ring gear 43. The brake BK1 of this embodiment is, for example, a brake device of the friction engagement type. The brake BK1 in an engaged state connects the ring gear 43 to the vehicle body side and restricts the rotation of the ring gear 43.

The ECU 60 controls the engine 1, the first rotating machine MG1, the second rotating machine MG2, the first clutch CL1, the second clutch CL2, and the brake BK1. The vehicle drive device 2-1 has an HV travel mode and an EV travel mode.

In the HV travel mode, the first clutch CL1 and the second clutch CL2 are engaged, and the brake BK1 is disengaged. Accordingly, the engine 1, the first rotating machine MG1, and the ring gear 43 are coupled.

The EV travel mode includes the first travel mode and the second travel mode. The first travel mode is the travel mode in which the vehicle runs by using the second rotating machine MG2 as the power source. As shown in FIG. 14, in the first travel mode, the first clutch CL1 and the second clutch CL2 are disengaged, and the brake BK1 is engaged. FIG. 15 is a collinear diagram according to the first travel mode of the second embodiment. In the collinear diagram, an S-axis indicates a rotational speed of the sun gear 41, a C-axis indicates a rotational speed of the carrier 44, and an R-axis indicates a rotational speed of the ring gear 43. When the first clutch CL1 and the second clutch CL2 are disengaged, the engine 1 and the first rotating machine MG1 are uncoupled from the ring gear 43. Then, the rotation of the ring gear 43 is restricted by the engagement of the brake BK1. Accordingly, the ring gear 43 functions as the reaction receiver with respect to the MG2 torque and can cause the carrier 44 to output the MG2 torque.

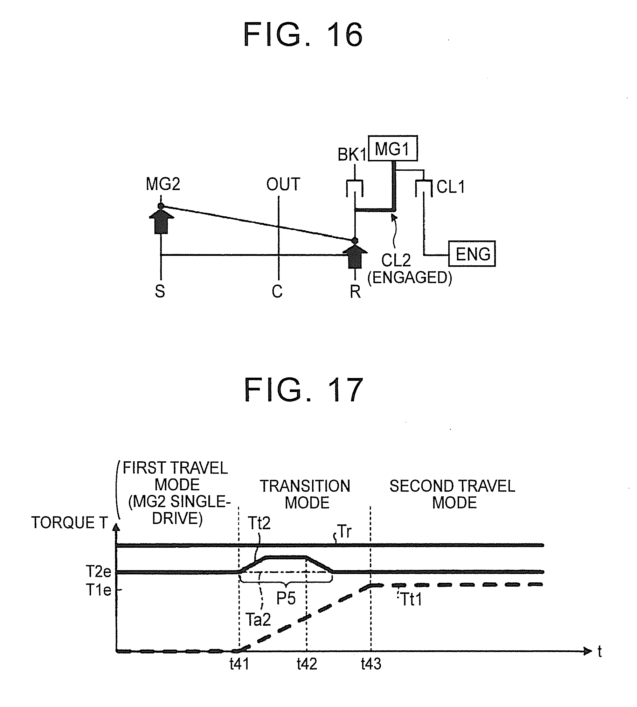

As shown in FIG. 14, in the second travel mode, the second clutch CL2 is engaged, and the first clutch CL1 and the brake BK1 are disengaged. FIG. 16 is a collinear diagram according to the second travel mode of the second embodiment. When the first clutch CL1 is disengaged, the engine 1 is uncoupled from the first rotating machine MG1. In addition, when the second clutch CL2 is engaged, the first rotating machine MG1 is connected to the ring gear 43. Furthermore, when the brake BK1 is disengaged, the rotation of the ring gear 43 is permitted. Accordingly, the torque of the first rotating machine MG1 and the torque of the second rotating machine MG2 are output from the carrier 44.

Upon the transition to the second travel mode, the ECU 60 determines the torque to be shared by the first rotating machine MG1 and the torque to be shared by the second rotating machine MG2 in the second travel mode. The torque to be shared is determined on the basis of a gear ratio of the planetary gear mechanism 40. The torque to be shared by the first rotating machine MG1 and the torque to be shared by the second rotating machine MG2 are determined such that torque corresponding to the requested torque for the vehicle 100 is output from the carrier 44.

Here, when the transition from the first travel mode to the second travel mode is made, a delay in transmission of the MG1 torque to the drive wheel 32 possibly occurs with respect to a command to initiate the output of the MG1 torque. For example, the delay caused by the inertia torque of the first rotating machine MG1 occurs in a period from a time at which the first rotating machine MG1 starts outputting the torque to a time at which the MG1 torque starts being transmitted to the drive wheel 32 via the planetary gear mechanism 40.

To handle this, when the transition from the first travel mode to the second travel mode is made, the ECU 60 sets the total torque of the MG1 torque command value Tt1 and the MG2 torque command value Tt2 to be higher than the requested torque for the vehicle 100. This total torque suppresses the decrease in the actual output torque with respect to the requested torque during the transition from the first travel mode to the second travel mode. FIG. 17 is a time chart according to torque control in the case where the requested torque of the second embodiment is constant. FIG. 17 shows the time chart in the case where the transition from the first travel mode to the second travel mode is made when the requested torque Tr is constant. The transition to the second travel mode is started at time t41. The total torque of the MG1 torque command value Tt1 and the MG2 torque command value Tt2 is set higher than the requested torque Tr until a specified period P5 elapses from the beginning of the transition to the second travel mode. In other words, the MG1 torque command value Tt1 and the MG2 torque command value Tt2 in the specified period P5 are set to be such values that the actual output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr.

In FIG. 17 a symbol Ta2 denotes the MG2 torque in accordance with the requested torque Tr and the gear ratio of the planetary gear mechanism 40 (hereinafter, referred to as "specified MG torque"), in other words, torque determined by static torque balance in the planetary gear mechanism 40. In the case where the specified MG2 torque Ta2 is input to the sun gear 41 when the MG1 torque that is equal to the MG1 torque command value Tt1 is transmitted to the ring gear 43, it is possible to output torque, which corresponds to the requested torque Tr, from the carrier 44. For example, when a decrease in an engagement force of the brake BK1 and an increase in the output of the MG1 torque are combined, a required reaction force can be generated in the ring gear 43 by the engagement force of the brake BK1 (torque capacity) and the MG1 torque. If the delay in the actual MG1 torque occurs with respect to the MG1 torque command value Tt1 in this case, a shortage of the reaction torque occurs, and the output torque possibly fluctuates.

In this embodiment, the MG2 torque command value Tt2 in the specified period P5 is set to be higher than the specified MG torque Ta2. In other words, in the specified period P5, the total torque of the MG1 torque command value Tt1 and the MG2 torque command value Tt2 is set higher than the total torque, from which the requested torque Tr can be output in the case where there is no delay in the MG1 torque. Accordingly, the total torque of the MG1 torque command value Tt1 and the MG2 torque command value Tt2 in the specified period P5 is the higher than the requested torque Tr and can suppress the fluctuations in output torque.

In addition, as shown in FIG. 17, the MG2 torque command value Tt2 of the second rotating machine MG2, which has been the power source in the first travel mode, during the transition from the first travel mode to the second travel mode is higher than the MG2 torque command value Tt2 before the beginning of the transition. Accordingly, the fluctuations in output torque can be suppressed by temporarily increasing the MG2 torque for the delay in transmission of the MG1 torque. Furthermore, in the case where there is the delay in the MG1 torque when the brake BK1 is disengaged at the beginning of the transition to the second travel mode, the rotational speed of the ring gear 43 may temporarily be changed to a negative rotation side due to travel resistance torque. To handle this, the MG2 torque command value Tt2 is set higher than the specified MG torque Ta2, and fluctuations in the rotational speed of the carrier 44 can thereby be suppressed. It is preferred that the rotational speed of the carrier 44 during the transition from the first travel mode to the second travel mode is maintained by the total torque of the MG1 torque command value Tt1 and the MG2 torque command value Tt2 in the specified period P5.

The ECU 60 reduces the discrepancy between the MG2 torque command value Tt2 and the specified MG torque Ta2 from time t42. At this time, the discrepancy may significantly be reduced in the initial stage, and the reduction amount may gradually be reduced thereafter. Accordingly, it is possible to suppress the actual output torque from overshooting with respect to the requested torque Tr. When the MG1 torque command value Tt1 becomes torque T1e to be shared by the first rotating machine MG1 in the second travel mode and the MG2 torque command value Tt2 becomes torque T2e to be shared by the second rotating machine MG2 in the second travel mode, the transition to the second travel mode is completed. In FIG. 17, the transition to the second travel mode is completed at time t43.

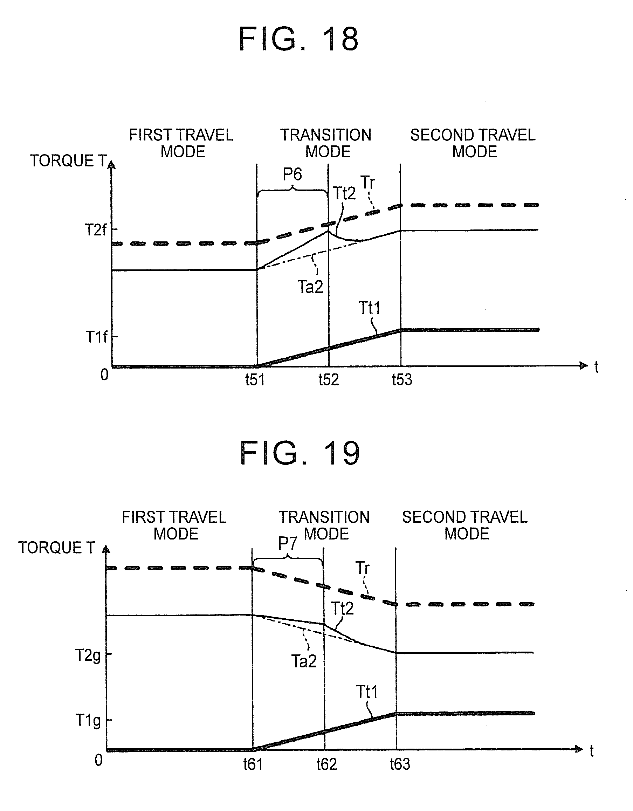

FIG. 18 is a time chart according to torque control in the case where the requested torque of the second embodiment is increased. FIG. 18 shows the time chart in the case where the transition from the first travel mode to the second travel mode is made when the requested torque Tr is increased. The transition to the second travel mode is started at time t51. The total torque of the MG1 torque command value Tt1 and the MG2 torque command value Tt2 is set higher than the requested torque Tr from the beginning of the transition to the second travel mode until a specified period P6 elapses. When the transition mode is started, the MG2 torque command value Tt2 is set as higher torque than the specified MG torque Ta2. In other words, the MG1 torque command value Tt1 and the MG2 torque command value Tt2 in the specified period P6 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. Accordingly, the fluctuations in output torque at the beginning of the transition to the second travel mode are suppressed. In addition, the torque command value of the second rotating machine MG2, which has been the power source in the first travel mode before the transition, in the transition mode is higher than the torque command value before the beginning of the transition.

The ECU 60 reduces the discrepancy between the MG2 torque command value Tt2 and the specified MG torque Ta2 from time t52 at which the specified period P6 has elapsed. As a way that the discrepancy is reduced at this time, the discrepancy may significantly be reduced in the initial stage, and the reduced amount may gradually be reduced thereafter. When the MG1 torque command value Tt1 becomes torque T1f to be shared by the first rotating machine MG1 in the second travel mode and the MG2 torque command value Tt2 becomes torque T2f to be shared by the second rotating machine MG2 in the second travel mode, the transition to the second travel mode is completed. In FIG. 18, the transition to the second travel mode is completed at time t53.

FIG. 19 is a time chart according to torque control in the case where the requested torque of the second embodiment is decreased. FIG. 19 shows the time chart in the case where the transition from the first travel mode to the second travel mode is made when the requested torque Tr is decreased. The transition to the second travel mode is started at time t61. The total torque of the MG1 torque command value Tt1 and the MG2 torque command value Tt2 is set higher than the requested torque Tr from the beginning of the transition to the second travel mode until a specified period P7 elapses. In other words, the MG1 torque command value Tt1 and the MG2 torque command value Tt2 in the specified period P7 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. When the transition mode is started, the MG2 torque command value Tt2 is set as higher torque than the specified MG torque Ta2.

The ECU 60 reduces the discrepancy between the MG2 torque command value Tt2 and the specified MG2 torque Ta2 from time t62 at which the specified period P7 has elapsed. As the way that the discrepancy is reduced at this time, the discrepancy may significantly be reduced in the initial stage, and the reduction amount may gradually be reduced thereafter. When the MG1 torque command value Tt1 becomes torque T1g to be shared by the first rotating machine MG1 in the second travel mode and the MG2 torque command value Tt2 becomes torque T2g to be shared by the second rotating machine MG2 in the second travel mode, the transition to the second travel mode is completed. In FIG. 19, the transition to the second travel mode is completed at time t63.

It should be noted that the total torque of the MG1 torque command value Tt1 and the MG2 torque command value Tt2 in the specified period may be variable in accordance with a condition. For example, the differential torque between the above total torque and the requested torque Tr (the magnitude by which the magnitude of the total torque exceeds the magnitude of the requested torque Tr) in the case where a change in the rotational speed of the first rotating machine MG1, which newly becomes the power source in the second travel mode, during the transition from the first travel mode to the second travel mode is significant may be set higher than the differential torque between the above total torque and the requested torque Tr in the case where the change in said rotational speed is small.

### [Third Embodiment]

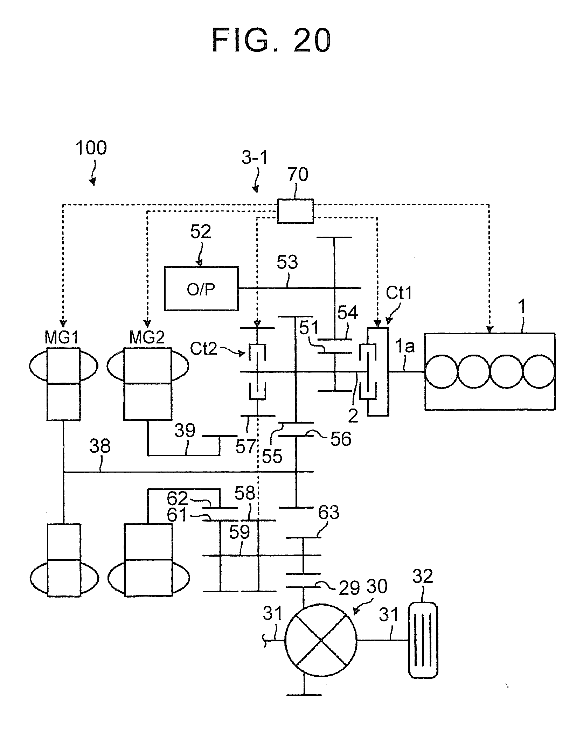

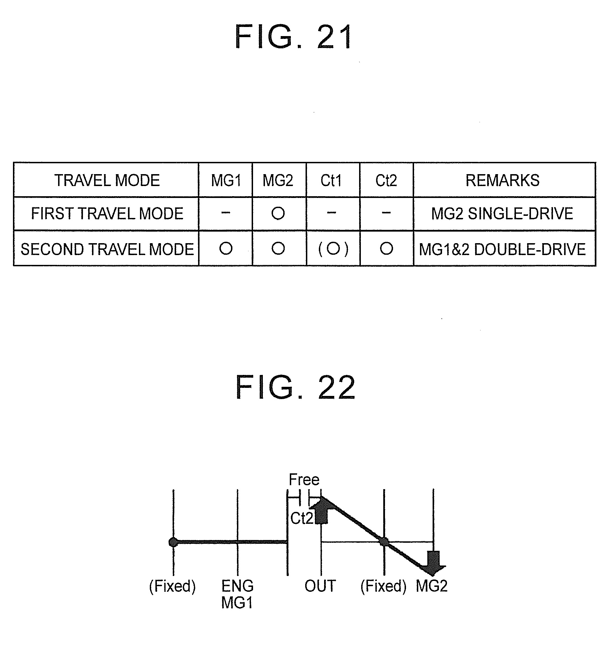

A description will be made on a third embodiment with reference to FIG. 20 to FIG. 26. For the third embodiment, components that have similar functions to those described in each of the above embodiments are denoted by the same reference numerals, and the overlapping description will not be made. FIG. 20 is a schematic configuration diagram of a vehicle according to the third embodiment, and FIG. 21 is a view that shows an operational engagement table of the vehicle according to the third embodiment.

The vehicle 100 shown in FIG. 20 is the hybrid (HV) vehicle that has the engine 1, the first rotating machine MG1, and the second rotating machine MG2 as the power sources. The vehicle 100 may be the plug-in hybrid (PHV) vehicle that can be charged by the external electric power supply. The vehicle 100 is configured by including a first clutch Ct1, a second clutch Ct2, and an oil pump 52, in addition to the above power sources.

In addition, a vehicle drive device 3-1 according to this embodiment is configured by including the first rotating machine MG1, the second rotating machine MG2, the engine 1, and the second clutch Ct2. The rotational shaft 1a of the engine 1 is connected to the input shaft 2 via the first clutch Ct1. The input shaft 2 is provided with a pump drive gear 51. The pump drive gear 51 meshes with a pump driven gear 54 that is provided on a rotational shaft 53 of the oil pump 52.

The input shaft 2 is provided with an MG1 drive gear 55. The MG1 drive gear 55 meshes with a driven gear 56 that is provided on a rotational shaft 38 of the first rotating machine MG1. A counter drive gear 57 is connected to the input shaft 2 via the second clutch Ct2. Each of the first clutch Ct1 and the second clutch Ct2 can be the clutch of the friction engagement type, for example. The counter drive gear 57 meshes with a counter driven gear 58 that is provided on a counter shaft 59. The counter shaft 59 is provided with an MG2 driven gear 61. The MG2 driven gear 61 meshes with an MG2 drive gear 62 that is provided on a rotational shaft 39 of the second rotating machine MG2.

The counter shaft 59 is provided with a drive pinion gear 63. The drive pinion gear 63 meshes with the differential ring gear 29 of the differential 30. The engine torque, the MG1 torque, and the MG2 torque are combined on the counter shaft 59 and output from the drive pinion gear 63. In the vehicle drive device 3-1 according to this embodiment, the second clutch Ct2 is a clutch that disconnects the engine 1 and the drive wheel 32 from each other. The first rotating machine MG1 is connected to the power transmission path at a position closer to the engine 1 than the second clutch Ct2, and the second rotating machine MG2 is connected to the power transmission path at a position closer to the drive wheel 32 than the second clutch Ct2. An ECU 70 controls the engine 1, the first rotating machine MG1, the second rotating machine MG2, the first clutch Ct1, and the second clutch Ct2. The vehicle drive device 3-1 has the HV travel mode and the EV travel mode.

In the HV travel mode, the first clutch Ct1 and the second clutch Ct2 are engaged. When the first clutch Ct1 and the second clutch Ct2 are engaged, the engine 1 is connected to the drive wheel 32. In addition, since the second clutch Ct2 is engaged, the first rotating machine MG1 is connected to the drive wheel 32. In the HV travel mode, the oil pump 52 is brought into a state of being connected to each of the engine 1 and the drive wheel 32 and is rotationally driven during a travel to supply oil to each part of the vehicle 100.

The EV travel mode includes the first travel mode and the second travel mode. The first travel mode is the mode in which the vehicle runs by using the second rotating machine MG2 as the power source. As shown in FIG. 21, the second clutch Ct2 is disengaged in the first travel mode. The first clutch Ct1 is, for example, brought into a disengaged state. FIG. 22 is a collinear diagram according to the first travel mode of the third embodiment. When the second clutch Ct2 is disengaged, the engine 1 and the rotating machine MG1 are uncoupled from the counter shaft 59

(OUT). The vehicle 100 runs by using the second rotating machine MG2 as the power source.

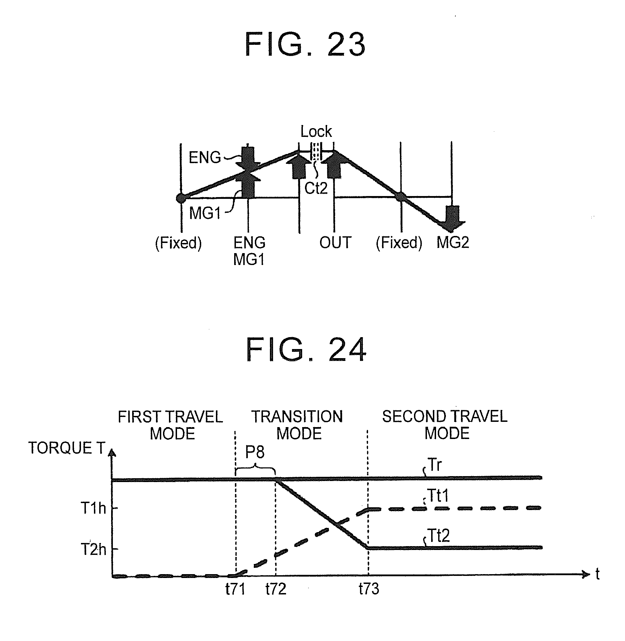

In the second travel mode, as shown in FIG. 21, the second clutch Ct2 is engaged. The first clutch Ct1 is, for example, brought into the engaged state. FIG. 23 is a collinear diagram according to the second travel mode of the third embodiment. When the second clutch Ct2 is engaged, the first rotating machine MG1 is connected to the counter shaft 59. The vehicle 100 runs by using the first rotating machine MG1 and the second rotating machine MG2 as the power sources. It should be noted that the first clutch Ct1 may be disengaged in the second travel mode. In this way, the vehicle 100 can run without rotating the engine 1.

Here, there is a possibility that the delay in transmission of the MG1 torque occurs with respect to a command to start outputting the MG1 torque during the transition from the first travel mode to the second travel mode. For example, the delay caused by the inertia torque of the first rotating machine MG1 occurs in a period from the time at which the first rotating machine MG1 starts outputting the torque to a time at which the MG1 torque starts being transmitted to the drive wheel 32 via the counter shaft 59. In the case where the first clutch Ct1 is engaged, the delay caused by the inertia torque of the engine 1 further occurs.

To handle this, the ECU 70 sets the total torque of the MG1 torque command value Tt1 and the MG2 torque command value Tt2 to be higher than the requested torque for the vehicle 100 during the transition from the first travel mode to the second travel mode. This total torque suppresses the decrease in the actual output torque with respect to the requested torque during the transition from the first travel mode to the second travel mode. FIG. 24 is a time chart according to torque control in the case where the requested torque of the third embodiment is constant. FIG. 24 shows the time chart in the case where the transition from the first travel mode to the second travel mode is made when the requested torque Tr is constant. The transition to the second travel mode is started at time t71. The total torque of the MG1 torque command value Tt1 and the MG2 torque command value Tt2 is set higher than the requested torque Tr until a specified period P8 elapses from the beginning of the transition to the second travel mode. In other words, the MG1 torque command value Tt1 and the MG2 torque command value Tt2 in the specified period P8 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. In this embodiment, the MG2 torque command value Tt2 in the specified period P8 is set as torque with the same magnitude as the requested torque.

The ECU 70 changes the MG2 torque command value Tt2 to become torque T2h to be shared by the second rotating machine MG2 in the second travel mode from time t72 at which the specified period P8 has elapsed. When the MG1 torque command value Tt1 becomes torque T1h to be shared by the first rotating machine MG1 in the second travel mode and the MG2 torque command value Tt2 becomes the torque T2h to be shared by the second rotating machine MG2 in the second travel mode, the transition to the second travel mode is completed. In FIG. 24, the transition to the second travel mode is completed at time t73.

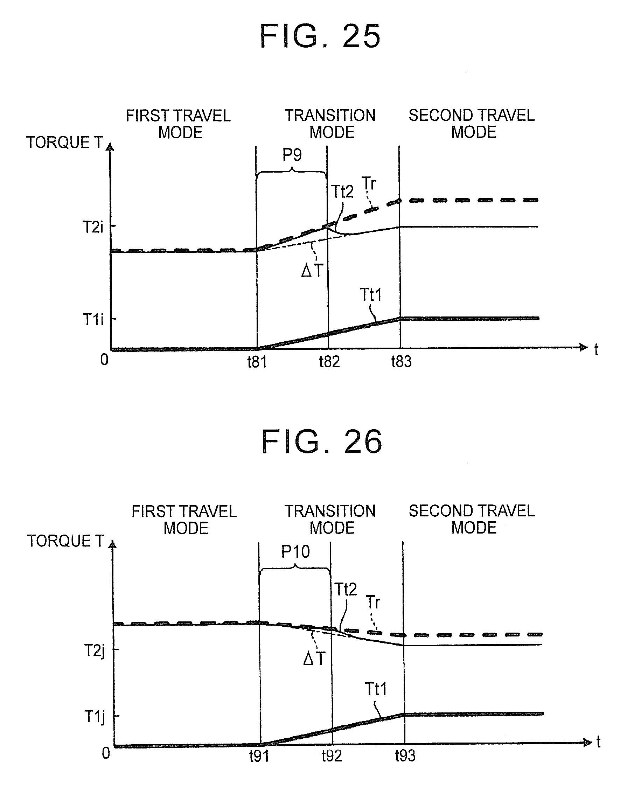

FIG. 25 is a time chart according to torque control in the case where the requested torque of the third embodiment is increased. FIG. 25 shows the time chart in the case where the transition from the first travel mode to the second travel mode is made when the requested torque Tr is increased. The transition to the second travel mode is started at time t81. The total torque of the MG1 torque command value Tt1 and the MG2 torque command value Tt2 is set higher than the requested torque Tr from the beginning of the transition to the second travel mode until a specified period P9 elapses. In other words, the MG1 torque command value Tt1 and the MG2 torque command value Tt2 in the specified period P9 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. In this embodiment, the MG2 torque command value Tt2 in the specified period P9 is set as torque with the same magnitude as the requested torque Tr.

In FIG. 25, differential torque ΔT is the torque of the difference between the requested torque Tr and the MG1 torque command value Tt1. When the transition mode is started, the MG2 torque command value Tt2 is set as the higher torque than the differential torque ΔT. Accordingly, the fluctuations in output torque at the beginning of the transition to the second travel mode are suppressed. In addition, the torque command value of the second rotating machine MG2, which has been the power source in the first travel mode before the transition, in the transition mode, is higher than the torque command value before the beginning of the transition.

The ECU 70 reduces the discrepancy between the MG2 torque command value Tt2 and the differential torque ΔT from time t82 at which the specified period P9 has elapsed. The way that the discrepancy is reduced at this time can be the same as that described in the above first embodiment. When the MG1 torque command value Tt1 becomes torque T1i to be shared by the first rotating machine MG1 in the second travel mode and the MG2 torque command value Tt2 becomes torque T2i to be shared by the second rotating machine MG2 in the second travel mode, the transition to the second travel mode is completed. In FIG. 25, the transition to the second travel mode is completed at time t83.

FIG. 26 is a time chart according to torque control in the case where the requested torque of the third embodiment is decreased. FIG. 26 shows the time chart in the case where the transition from the first travel mode to the second travel mode is made when the requested torque Tr is decreased. The transition to the second travel mode is started at time t91. The total torque of the MG1 torque command value Tt1 and the MG2 torque command value Tt2 is set higher than the requested torque Tr from the beginning of the transition to the second travel mode until a specified period P10 elapses. In other words, the MG1 torque command value Tt1 and the MG2 torque command value Tt2 in the specified period P10 are set to be such values that the output torque in the case where the MG1 torque that is equal to the MG1 torque command value Tt1 is transmitted to the drive wheel 32 and the MG2 torque that is equal to the MG2 torque command value Tt2 is transmitted to the drive wheel 32 is higher than the requested torque Tr. In FIG. 26, differential torque ΔT is the torque of the difference between the requested torque Tr and the MG1 torque command value Tt1. When the transition mode is started, the MG2 torque command value Tt2 is set as the higher torque than the differential torque ΔT. In this embodiment, the MG2 torque command value Tt2 in the specified period P10 is set as torque with the same magnitude as the requested torque Tr.

The ECU 70 reduces the discrepancy between the MG2 torque command value Tt2 and the differential torque ΔT from time t92 at which the specified period P10 has elapsed. The way that the discrepancy is reduced at this time can be the same as that described in the above first embodiment. When the MG1 torque command value Tt1 becomes torque T1j to be shared by the first rotating machine MG1 in the second travel mode and the MG2 torque command value Tt2 becomes torque T2j to be shared by the second rotating machine MG2 in the second travel mode, the transition to the second travel mode is completed. In FIG. 26, the transition to the second travel mode is completed at time t93.

It should be noted that the total torque of the MG1 torque command value Tt1 and the MG2 torque command value Tt2 in the specified period may be variable in accordance with a condition. For example, the differential torque between the above total torque and the requested torque Tr (the magnitude by which the magnitude of the total torque exceeds the magnitude of the requested torque Tr) in the case where the change in the rotational speed of the first rotating machine MG1, which newly becomes the power source in the second travel mode, during the transition from the first travel mode to the second travel mode is significant, may be set higher than the differential torque between the above total torque and the requested torque Tr in the case where the change in said rotational speed is small.

The contents disclosed in each of the above embodiments and the modified examples can appropriately be combined to be implemented.

### DESCRIPTION OF THE REFERENCE NUMERALS

1-1, 1-2, 1-3, 2-1, 3-1/ VEHICLE DRIVE DEVICE
1/ ENGINE
32/ DRIVE WHEEL
50, 60, 70/ ECU
100/ VEHICLE
MG1/ FIRST ROTATING MACHINE
MG2/ SECOND ROTATING MACHINE
Tt1/ MG1 TORQUE COMMAND VALUE
Tt2/ MG2 TORQUE COMMAND VALUE
Tr/ REQUESTED TORQUE

## Claims

1. A vehicle drive device comprising:
a first rotating machine; and
a second rotating machine, wherein
when transition from a first travel mode, in which either one of the first rotating machine and the second rotating machine is used as a power source, to a second travel mode, in which the first rotating machine and the second rotating machine are used as the power sources, is made, total torque of a torque command value of the first rotating machine and a torque command value of the second rotating machine is set higher than requested torque for a vehicle.

2. The vehicle drive device according to claim 1, wherein
the torque command value of the rotating machine, which is used as the power source in the first travel mode, during the transition from the first travel mode to the second travel mode is higher than the torque command value before beginning of the transition.

3. The vehicle drive device according to claim 1, wherein
the total torque suppresses a decrease in actual output torque with respect to the requested torque during the transition from the first travel mode to the second travel mode.

4. The vehicle drive device according to claim 1, wherein
the torque command value of the rotating machine, which is used as the power source in the first travel mode, during the transition from the first travel mode to the second travel mode is set as the requested torque.

5. The vehicle drive device according to claim 1, wherein
differential torque between the total torque and the requested torque in a case where a change in a rotational speed of the rotating machine, which newly becomes the power source in the second travel mode, during the transition from the first travel mode to the second travel mode is significant is higher than the differential torque between the total torque and the requested torque in a case where the change in said rotational speed is small.

6. The vehicle drive device according to claim 1 further comprising
an engine, a planetary gear mechanism, and a restriction device for restricting rotation of the engine, wherein
the first rotating machine is connected to a sun gear of the planetary gear mechanism, the engine is connected to a carrier of the planetary gear mechanism, and the second rotating machine and a drive wheel are connected to a ring gear of the planetary gear mechanism, and
the rotation of the engine is restricted by the restricting device, so as to execute the second travel mode.

7. The vehicle drive device according to claim 1 further comprising
an engine, a planetary gear mechanism, a first clutch, a second clutch, and a brake, wherein
the first rotating machine is connected to the engine via the first clutch,
the second rotating machine is connected to a sun gear of the planetary gear mechanism, a drive wheel is connected to a carrier of the planetary gear mechanism, and the first rotating machine is connected to a ring gear of the planetary gear mechanism via the second clutch,
the brake is engaged to restrict rotation of the ring gear,
in the first travel mode, the vehicle runs by using the second rotating machine as the power source while the brake is engaged and the second clutch is disengaged, and
in the second travel mode, the vehicle runs while the brake is disengaged and the second clutch is engaged.

8. The vehicle drive device according to claim 1 further comprising
an engine and a clutch for connecting/disconnecting the engine and a drive wheel, wherein
the first rotating machine is connected to a power transmission path at a position closer to the engine than the clutch,
the second rotating machine is connected to the power transmission path at a position closer to the drive wheel side than the clutch,
in the first travel mode, the vehicle runs while the clutch is disengaged and the second rotating machine is used as the power source, and
in the second travel mode, the vehicle runs while the clutch is engaged.

9. The vehicle drive device according to claim 7, wherein
the total torque maintains a rotational speed of the carrier during the transition from the first travel mode to the second travel mode.

10. The vehicle drive device according to claim 1, wherein
the total torque is set higher than the requested torque in a period from the beginning of the transition until a specified period elapses, the transition being made from the first travel mode to the second travel mode.
